# EUROPEAN PATENT APPLICATION

(11) **EP 4 219 078 A1**
(43) Date of publication of application: **02.08.2023**
(21) Application number: 23152185.7
(22) Date of filing: 18.01.2023
(51) Int. Cl.: B25B 23/142, B25B 23/147, G05B 19/418

(54) **TOOL SYSTEM**

(30) Priority: 27.01.2022 JP 2022011290
(71) Applicant: Panasonic Intellectual Property Management Co., Ltd., Osaka-shi, Osaka 540-6207 (JP)
(72) Inventor: YAMANAKA, Mutsuhiro, Osaka-shi, 540-6207 (JP); UEKUSA, Koji, Osaka-shi, 540-6207 (JP)
(74) Representative: Müller-Boré & Partner Patentanwälte PartG mbB

(57) **Abstract**

An object of the present disclosure is to speed up the processing of determining a work spot. A tool system (1) includes an image capturing unit (41), a storage unit (11), a class identifier (53), and a spot determiner (54). The image capturing unit (41) shoots a work spot of a target article (W1) and thereby generates captured image data. The storage unit (11) stores a plurality of reference image data items with the plurality of reference image data items classified into multiple groups according to respective classes of the plurality of articles. The class identifier (53) acquires identification information to identify the class of the target article (W1). The spot determiner (54) determines the work spot shot by the image capturing unit (41) by comparing the captured image data with one of the plurality of reference image data items, which belongs to one of the multiple groups that is associated with the class of the target article (W1) identified by reference to the identification information.

## Description

### Technical Field

The present disclosure generally relates to a tool system and more particularly relates to a tool system including an image capturing unit.

### Background Art

JP 2021-074810 A discloses a tool system including a tool, a storage unit, an image capturing unit, and a processing unit. The storage unit stores a plurality of reference images corresponding to a plurality of work targets, respectively. The image capturing unit is provided for the tool to generate a captured image. The processing unit performs image processing of comparing the captured image shot by the image capturing unit with the plurality of reference images, thereby identifying an actually shot work target, which is a work target shot in the captured image, out of a plurality of work targets. The shooting condition for the plurality of reference images is different from the shooting condition for the captured image.

A tool system of the type disclosed in JP 2021-074810 A is sometimes required to speed up the processing of determining the work spot (corresponding to the actually shot work target).

### Summary of Invention

It is therefore an object of the present disclosure to provide a tool system with the ability to speed up the processing of determining the work spot.

A tool system according to an aspect of the present disclosure includes a driving unit, a working part, an image capturing unit, a storage unit, a class identifier, and a spot determiner. The driving unit is activated with power supplied from a power source. The working part is driven by the driving unit to perform work on a work spot of a target article. The image capturing unit shoots the work spot and thereby generates captured image data. The storage unit stores a plurality of reference image data items with the plurality of reference image data items classified into multiple groups according to respective classes of a plurality of articles. The plurality of reference image data items correspond to respective models of work spots of the plurality of articles. The class identifier acquires identification information to identify the class of the target article. The spot determiner determines the work spot shot by the image capturing unit by comparing the captured image data with one of the plurality of reference image data items, which belongs to one of the multiple groups that is associated with the class of the target article identified by reference to the identification information.

### Brief Description of Drawings

FIG. 1 is a block diagram of an overall system including a tool system according to an exemplary embodiment;
FIG. 2 is a perspective view of the tool system;
FIG. 3 schematically illustrates how the tool system shoots a target article;
FIG. 4 is a flowchart showing how the tool system may be used; and
FIG. 5 is a flowchart showing how a tool system according to a second variation may be used.

### Description of Embodiments

### (Embodiment)

A tool system according to an exemplary embodiment will now be described with reference to the accompanying drawings. Note that the embodiment to be described below is only an exemplary one of various embodiments of the present disclosure and should not be construed as limiting. Rather, the exemplary embodiment may be readily modified in various manners depending on a design choice or any other factor without departing from the scope of the present disclosure. The drawings to be referred to in the following description of embodiments are all schematic representations. Thus, the ratio of the dimensions (including thicknesses) of respective constituent elements illustrated on the drawings does not always reflect their actual dimensional ratio.

### (Overview)

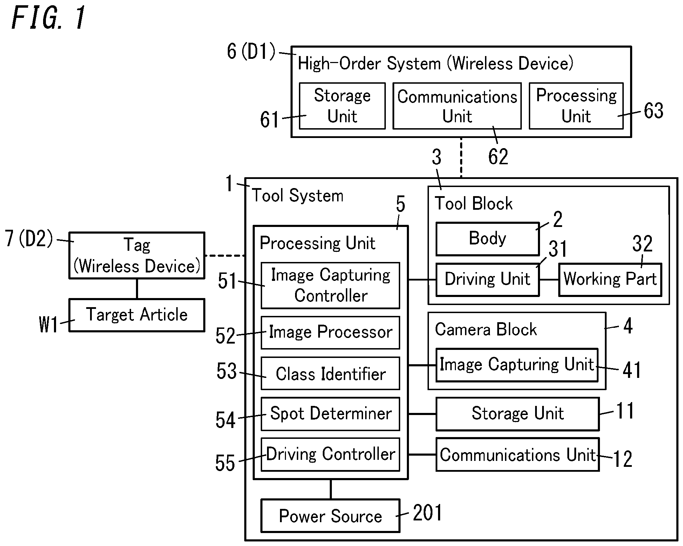

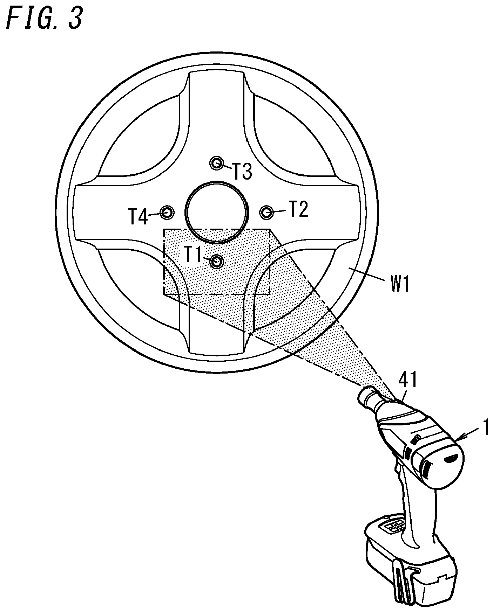

A tool system 1 according to this embodiment as shown in FIG. 1 may be used in the process of manufacturing a target article W1 (article of manufacture) at a factory, for example. The tool system 1 includes a tool block 3, which may be an electric tool such as an impact wrench and which includes a working part 32 such as a socket or a wrench bit. The working part 32 is a part for use to perform work on a predetermined work spot, which is one of a plurality of work spots T1-T4 (refer to FIG. 3) of a target article W1. Each of the plurality of work spots T1-T4 is a particular part of the target article W1. The worker performs a predetermined type of work on the predetermined work spot of the target article W1 by using this tool system 1.

In addition, the tool system 1 also includes an image capturing unit 41 that shoots a work spot and thereby generates captured image data. The tool system 1 determines, based on the captured image data, the work spot that has been shot by the image capturing unit 41. In addition, the tool system 1 also controls the operation of the working part 32 according to the work spot determined. The tool system 1 may be scheduled, for example, to perform work on the plurality of work spots T1-T4 following a predetermined procedure. When finding the work spot determined based on the captured image data conforming to the procedure, the tool system 1 allows the working part 32 to operate. On the other hand, when finding the work spot determined not conforming to the procedure, the tool system 1 prohibits the working part 32 from operating.

Also, the tool system 1 performs work on target articles W1 of multiple classes at a factory. As used herein, the "class" of a target article W1 refers to, for example, the model number, the product number, or the manufacturing lot number of the target article W1. The tool system 1 has the function of determining (identifying) the class of the target article W1.

For example, if the tool system 1 is used at a car factory and the target article W1 is a car or a car component, then the class of the target article W1 may be, for example, a combination of a car model and its body color, or its product number. Alternatively, if the tool system 1 is used at a car factory and the target article W1 is a car component, then the class of the target article W1 may be, for example, a combination of information indicating what the target article W1 is (e.g., a bumper, a hood (or bonnet), or a door), a car model, and its body color.

As shown in FIG. 1, the tool system 1 according to this embodiment includes a driving unit 31, the working part 32, the image capturing unit 41, a storage unit 11, a class identifier 53, and a spot determiner 54. The driving unit 31 is activated with power supplied from a power source 201. The working part 32 is driven by the driving unit 31 to perform work on a work spot of a target article W1. The image capturing unit 41 shoots the work spot and thereby generates captured image data. The storage unit 11 stores a plurality of reference image data items with the plurality of reference image data items classified into multiple groups according to respective classes of the plurality of articles. The plurality of reference image data items correspond to respective models of work spots of the plurality of articles. The class identifier 53 acquires identification information to identify the class of the target article W1. The spot determiner 54 determines the work spot shot by the image capturing unit 41 by comparing the captured image data with one of the plurality of reference image data items, which belongs to one of the multiple groups that is associated with the class of the target article W1 identified by reference to the identification information.

According to this embodiment, the spot determiner 54 determines the work spot by using a reference image data item belonging to a group (hereinafter referred as a "target group") associated with the class of the target article W1. That is to say, the spot determiner 54 may determine the work spot without using reference image data items not belonging to the target group. This enables speeding up the processing of determining the work spot, compared to using all reference image data items. In addition, this also reduces the chances of the spot determiner 54 determining, by mistake, a work spot, associated with a reference image data item not belonging to the target group, to be a work spot on which the work is going to be performed.

### (Details)

### (1) Premise

The tool system 1 may be used, for example, in an assembly line for performing assembling work on articles of manufacture at a factory. In particular, in this embodiment, the tool block 3 included in the tool system 1 is supposed to be a fastening tool such as an impact wrench for use to tighten a fastening member (such as a bolt or a nut). Specifically, this embodiment is supposed to be applied to a situation where a single article of manufacture has a plurality of portions to be fastened (work spots T1-T4, refer to FIG. 3), thus requiring the worker to attach a fastening member onto each of those portions to be fastened by using the tool block 3 in a single workplace.

As used herein, the "portion to be fastened" refers to a part of a workpiece (target article W1), to which the fastening member is going to be attached. For example, if the fastening member is a bolt, then the portion to be fastened is an area surrounding, and covering, a screw hole to which the fastening member is attached. That is to say, in this embodiment, a single workpiece has a plurality of such portions to be fastened.

As used herein, the "target article" refers to an article on which work is supposed to be performed by using the tool block 3.

As used herein, the "captured image data" refers to the electronic data of an image captured by the image capturing unit 41 and includes a still picture (still image) and a moving picture (motion picture). The "moving picture" further includes a group of still pictures captured by stop-motion shooting, for example. The captured image data does not have to be output data itself provided by the image capturing unit 41. For example, the captured image data may have been subjected, as needed, to data compression, conversion into another data format, cropping an image portion from the image captured by the image capturing unit 41, focus adjustment, brightness adjustment, contrast adjustment, or any of various other types of image processing. Alternatively, the captured image data may also be data representing a feature quantity extracted from the output data of the image capturing unit 41. In this embodiment, the output data of the image capturing unit 41 is supposed to be full-color still picture data, for example. In addition, in this embodiment, the captured image data is supposed to be used after having been converted into a feature quantity.

### (2) Overall configuration

As shown in FIG. 1, the tool system 1 according to this embodiment includes the tool block 3, a camera block 4, a processing unit 5, the storage unit 11, a communications unit 12, and the power source 201. The tool system 1 communicates with a high-order system 6 (wireless device D1) and a tag 7 (wireless device D2) wirelessly. The tag 7 is an attachment of the target article W1.

### (3) Tool block

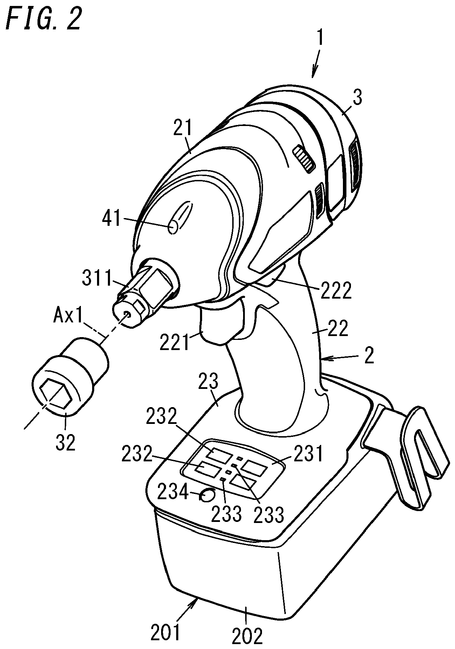

The tool block 3 shown in FIGS. 1 and 2 is a portable one. The tool block 3 includes a body 2, the driving unit 31, and the working part 32.

In this embodiment, the tool block 3 is an electric tool configured to activate the working part 32 by using electrical energy. In particular, in this embodiment, the tool block 3 is supposed to be an impact wrench. Such a tool block 3 may be used to perform fastening work of attaching a fastening member onto the target article W1.

Also, the power source 201 according to this embodiment is a battery pack. The driving unit 31 is activated with motive power (e.g., electrical energy) supplied from the power source 201. That is to say, the driving unit 31 drives the working part 32 with the motive power supplied from the power source 201. In this embodiment, the power source 201 is supposed to be counted among the constituent elements of the tool system 1. However, the power source 201 does not have to be one of the constituent elements of the tool system 1.

The driving unit 31 includes a motor. In this embodiment, the motor is supposed to be an electric motor. The driving unit 31 further includes, for example, a transmission mechanism and an output shaft 311 (refer to FIG. 2). The transmission mechanism includes a plurality of gears and an impact mechanism. The transmission mechanism transmits the kinetic energy of the motor to the output shaft 311. That is to say, the output shaft 311 turns around a rotational axis Ax1, which is aligned with the direction in which the output shaft 311 protrudes, as the motor runs. In other words, as the motor runs, torque is applied to the output shaft 311, thereby causing the output shaft 311 to turn.

The working part 32 is held by the output shaft 311. The working part 32 receives the kinetic energy from the motor and performs work on the target article W1. The working part 32 according to this embodiment is a socket. The working part 32 turns after having been fitted onto a fastening member. Thus, the fastening member turns along with the working part 32, thus having the work of tightening or loosening the fastening member into/from the target article W1 done.

Optionally, a socket anvil may also be attached, instead of the working part 32, onto the output shaft 311. If the socket anvil is attached to the output shaft 311, a working part 32 such as a bit (such as a screwdriver bit or a drill bit) may be attached to the output shaft 311 via the socket anvil.

As shown in FIG. 2, the body 2 includes a barrel 21, a grip 22, and an attachment member 23. The barrel 21 is formed in a cylindrical shape (e.g., circular cylindrical shape in this embodiment). The grip 22 protrudes along a normal to a part of the circumferential surface of the barrel 21 (i.e., along the radius of the barrel 21). To the attachment member 23, the power source 201 is attached removably. In this embodiment, the attachment member 23 is provided at the tip of the grip 22. In other words, the barrel 21 and the attachment member 23 are coupled together via the grip 22.

In the body 2, housed are a part of the driving unit 31 (namely, its motor and transmission mechanism, for example) and a part of the image capturing unit 41. In addition, the processing unit 5 (refer to FIG. 1), the storage unit 11, and the communications unit 12 are also housed in the body 2. That is to say, in this embodiment, the image capturing unit 41, the processing unit 5, the storage unit 11, and the communications unit 12, which are constituent elements of the tool system 1, are housed in the body 2 and thereby integrated with the tool block 3. At least a part of the driving unit 31 is housed in the barrel 21.

The grip 22 is a part to be gripped by the worker while he or she is performing the work using the tool system 1. The tool block 3 further includes a trigger switch 221 and a forward/reverse switch 222 provided for the grip 22. The trigger switch 221 is a switch for controlling the ON/OFF states of the operation performed by the driving unit 31 and allows adjusting the number of revolutions of the output shaft 311 according to how deep the trigger switch 221 is pulled. The forward/reverse switch 222 is a switch for switching the rotational direction of the output shaft 311 from the clockwise direction to the counterclockwise direction, and vice versa.

The attachment member 23 is formed in the shape of a compressed rectangular parallelepiped. The power source 201 is attached removably to one side, opposite from the grip 22, of the attachment member 23.

The power source 201 (battery pack) includes a case 202 made of a resin and formed in a rectangular parallelepiped shape. The case 202 houses a rechargeable battery (such as a lithium-ion battery) inside. The power source 201 supplies electric power to the driving unit 31, the processing unit 5, the image capturing unit 41, and other constituent members.

The tool block 3 further includes an operating panel 231 provided for the attachment member 23. The operating panel 231 may include a plurality of press button switches 232 and a plurality of LEDs (light-emitting diodes) 233, for example. The operating panel 231 allows the worker to enter various types of settings for, and confirm the state of, the tool block 3. That is to say, by operating the press button switches 232 of the operating panel 231, the worker may change the operation mode of the tool block 3 or check the remaining capacity of the power source 201, for example.

The tool block 3 further includes a light-emitting unit 234 provided for the attachment member 23. The light-emitting unit 234 includes an LED, for example. The light-emitting unit 234 emits light toward the target article W1 while the worker is performing work using the tool block 3. The light-emitting unit 234 may be turned ON and OFF by operating the operating panel 231. Alternatively, the light-emitting unit 234 may also be lit automatically when the trigger switch 221 turns ON.

### (4) Camera block

As shown in FIG. 1, the camera block 4 includes the image capturing unit 41.

As shown in FIG. 2, the image capturing unit 41 is provided for the tool block 3 and generates captured image data. The image capturing unit 41 may be implemented as a camera including an image sensor and a lens, for example. The image sensor may be a two-dimensional image sensor such as a charge-coupled device (CCD) image sensor or a complementary metal-oxide semiconductor (CMOS) image sensor.

In this embodiment, the image capturing unit 41 may be housed in (the barrel 21 of) the body 2 of the tool block 3 and thereby provided for the tool block 3 integrally with the tool block 3. The image capturing unit 41 is provided to be oriented toward the tip of the output shaft 311 to capture an image of the target article W1 while the worker is performing the work using the tool block 3. In FIG. 3, the shaded part indicates an image capturing range of the image capturing unit 41.

In response to the worker pulling the trigger switch 221 or operating the operating panel 231, for example, the image capturing unit 41 captures an image within its image capturing range, thereby generating captured image data.

### (5) Storage unit

The storage unit 11 is housed in the body 2 of the tool block 3. Examples of the storage unit 11 include a read-only memory (ROM), a random-access memory (RAM), and an electrically erasable programmable read-only memory (EEPROM).

The storage unit 11 stores a plurality of reference image data items (i.e., multiple items of reference image data) with the plurality of reference image data items classified into multiple groups according to respective classes of the plurality of articles. That is to say, the storage unit 11 stores the plurality of reference image data items themselves and information for use to classify the plurality of reference image data items into multiple groups (hereinafter referred to as "classification information"). The plurality of reference image data items and the classification information may be stored in advance in the storage unit 11, provided by either the wireless device D1 or the wireless device D2, downloaded via a telecommunications line such as the Internet, or distributed after having been stored in a non-transitory storage medium such as a memory card.

Note that the "plurality of articles" as used herein includes an article to be subjected to the same type of work as the one currently performed on the target article W1. Examples of such an article, on which the same type of work as the one currently performed on the target article W1 is supposed to be performed, include an article having the same model number or product number as the target article W1. In addition, the plurality of articles further includes, for example, an article to be subjected to a different type of work from the one currently performed on the target article W1.

The reference image data is data corresponding to the model of a work spot of an article. More specifically, the model of the work spot of the article is a model for classifying the captured image data (image classification models). The reference image data may be original data generated by shooting the work spot of the article or data subjected to some type of image processing as needed, whichever is appropriate. In the following description of embodiments, a situation where the reference image data is the feature quantity of the work spot of the article will be described as an example. The reference image data may be, for example, a feature quantity extracted from predetermined image data by using a convolutional neural network. The predetermined image data may be generated by shooting an article using a predetermined device (such as the camera block 4 or any other device).

The reference image data may include, as error data, data generated by shooting at least one of a spot, other than the work spot, of the article or the environment surrounding the article. If the captured image data turns out to match the error data, then the spot that has been shot is determined to be erroneous as the work spot.

### (6) Communications unit

The communications unit 12 is housed in the body 2 of the tool block 3. The communications unit 12 includes a communications interface device. The communications unit 12 is ready to communicate with the wireless device D1, D2 via the communications interface device. As used herein, the phrase "be ready to communicate" refers to a state where the device is ready to transmit and receive signals either directly or indirectly via a network or a relay, for example, in compliance with an appropriate communications protocol for wired or wireless communication. The communications unit 12 according to this embodiment communicates wirelessly with the wireless device D1, D2 in compliance with a protocol suitable for short-range wireless communication such as the protocol for use in Bluetooth^{®}.

### (7) Processing unit

The processing unit 5 includes a computer system including one or more processors and a memory. At least some of the functions of the processing unit 5 are performed by making the processor of the computer system execute a program stored in the memory of the computer system. The program may be stored in the memory. The program may also be downloaded via a telecommunications line such as the Internet or distributed after having been stored in a non-transitory storage medium such as a memory card.

As shown in FIG. 1, the processing unit 5 includes an image capturing controller 51, an image processor 52, a class identifier 53, a spot determiner 54, and a driving controller 55. Note that these constituent elements 51-55 just represent respective functions to be performed by the processing unit 5 and none of these constituent elements 51-55 necessarily have a substantive configuration.

The image capturing controller 51 controls the image capturing unit 41. Under the control of the image capturing controller 51, the image capturing unit 41 shoots a work spot of the target article W1 and thereby generates captured image data.

The image processor 52 performs image processing on the captured image data generated by the image capturing unit 41. For example, the image processor 52 extracts, by using a convolutional neural network, a feature quantity from the captured image data generated by the image capturing unit 41.

The class identifier 53 acquires identification information to identify the class of the target article W1 shot by the image capturing unit 41. As used herein, the expression "the class identifier 53 acquires the identification information" refers to both a situation where the class identifier 53 generates the identification information and a situation where the class identifier 53 acquires the identification information that has already been generated. That is to say, the class identifier 53 may generate the identification information or acquire the identification information that has been generated by a constituent element other than the class identifier 53, whichever is appropriate.

In this embodiment, the communications unit 12 may communicate wirelessly with the wireless device D1, D2 and the functions of the class identifier 53 include the function of acquiring the identification information from the wireless device D1 or D2 via the communications unit 12.

Examples of the identification information include the model number, product number, and manufacturing lot number of the target article W1.

The spot determiner 54 determines the work spot that has been shot by the image capturing unit 41. More specifically, the spot determiner 54 determines the work spot that has been shot by the image capturing unit 41 by comparing the captured image data generated by the image capturing unit 41 with reference image data belonging to a predetermined group. As used herein, the "predetermined group" refers to a group of reference image data items associated with the class of the target article W1 identified by reference to the identification information.

That is to say, the spot determiner 54 obtains information about the class of the target article W1 that has been shot by the image capturing unit 41 by referring, first, to the identification information that has been acquired by the class identifier 53. In addition, the storage unit 11 also stores a plurality of reference image data items with the reference image data items classified into multiple groups according to the respective classes of the plurality of articles. The spot determiner 54 reads, from the storage unit 11, two or more reference image data items belonging to the group corresponding to the class that has been identified by reference to the identification information. Then, the spot determiner 54 compares the two or more reference image data items thus read with the captured image data generated by the image capturing unit 41.

The two or more reference image data items may represent, for example, the respective feature quantities of a plurality of work spots T1-T4 (refer to FIG. 3). The captured image data may represent, for example, the feature quantity of the work spot that has been shot by the image capturing unit 41. The spot determiner 54 compares the two or more reference image data items with the captured image data, thereby determining whether or not the work spot shot by the image capturing unit 41 agrees with any one of the plurality of work spots T1-T4.

The driving controller 55 controls the driving unit 31. The driving controller 55 may control the motor of the driving unit 31, for example.

If the work spot determined by the spot determiner 54 conforms to the predetermined procedure, then the driving controller 55 allows the motor to turn. On the other hand, if the work spot does not conform to the predetermined procedure, then the driving controller 55 prohibits the motor from turning. For example, the wireless device D1 or D2 may instruct the tool system 1 to perform work on the work spots T1-T4 of the target article W1 in the order of T1, T2, T3, and T4. In that case, at a point in time before the work starts to be performed on the target article W1, the driving controller 55 allows the motor to turn only if the spot determiner 54 has determined that the work spot shot by the image capturing unit 41 be the work spot T1. Next, at a point in time after the work has been done on the work spot T1 and before the work starts to be performed on the work spot T2, the driving controller 55 allows the motor to turn only if the spot determiner 54 has determined that the work spot shot by the image capturing unit 41 be the work spot T2.

Optionally, information about the working procedure with respect to the plurality of work spots may be stored in the storage unit 11 by, for example, making the image capturing unit 41 shoot the plurality of work spots T1-T4 in an arbitrary order after the operation mode of the tool system 1 has been turned into an operation mode in which the working procedure is stored. Also, the reference image data may also be generated at this time.

Alternatively, information about the working procedure with respect to the plurality of work spots may be stored in advance in the storage unit 11. Still alternatively, the information may also be transmitted from the wireless device D1 or D2 to the tool system 1 and stored in the storage unit 11.

### (8) High-order system

As shown in FIG. 1, the high-order system 6 is an exemplary wireless device D1. The high-order system 6 may be installed in, for example, a factory where the target article W1 is manufactured. The high-order system 6 communicates wirelessly with each of a plurality of tool systems 1. The high-order system 6 manages the work being performed by the plurality of tool systems 1.

The high-order system 6 includes a computer system including one or more processors and a memory. At least some of the functions of the high-order system 6 are performed by making the processor of the computer system execute a program stored in the memory of the computer system. The program may be stored in the memory. The program may also be downloaded via a telecommunications line such as the Internet or distributed after having been stored in a non-transitory storage medium such as a memory card.

The high-order system 6 includes a storage unit 61, a communications unit 62, and a processing unit 63.

Examples of the storage unit 61 include a ROM, a RAM, and an EEPROM. The storage unit 61 stores, for example, the manufacturing schedule of a plurality of target articles W1.

The communications unit 62 includes a communications interface device. The communications unit 62 is ready to communicate with the tool system 1 via the communications interface device.

The processing unit 63 includes one or more processors of a computer system. The processing unit 63 performs overall control on the high-order system 6.

### (9) Tag

As shown in FIG. 1, the tag 7 is an exemplary wireless device D2. The tag 7 may be, for example, an RF ID tag. The tool system 1 communicates wirelessly with the tag 7 and reads out identification information stored in the tag 7.

The tag 7 (wireless device D2) is an attachment of the target article W1. As used herein, the expression "the wireless device D2 is an attachment of the target article W1" may refer to a situation where the wireless device D2 is attached to the target article W1 or a situation where the wireless device D2 is built in the target article W1, whichever is appropriate. Alternatively, the expression "the wireless device D2 is an attachment of the target article W1" may also refer to a situation where the wireless device D2 and the target article W1 are both provided on the same stage or in the same box, for example.

### (10) Exemplary use

### (10.1) Premise

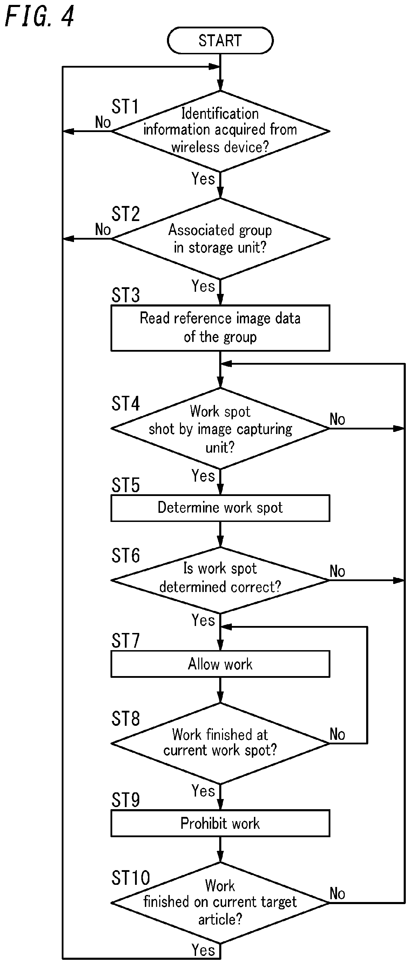

Next, an exemplary use of the tool system 1 will be described with reference to FIG. 4. Note that the flowchart shown in FIG. 4 shows just an exemplary method of using the tool system 1 according to the present disclosure. Thus, the processing steps shown in FIG. 4 may be performed in a different order as appropriate, an additional processing step may be performed as needed, or at least one of the processing steps may be omitted as appropriate. Note that in the following example, the target article W1 shown in FIG. 3 is supposed to be a car component and the identification information is supposed to include car model information. The target article W1 is supposed to have work spots T1-T4. Also, although the following description will be focused on a single tool system 1, there may be a plurality of tool systems 1. In that case, the processing to be described below will be performed by each of the plurality of tool systems 1.

In an initial state, the driving controller 55 of the tool system 1 prohibits the working part 32 from performing any work. That is to say, in that state, the driving unit 31 is not activated.

### (10.2) Identification of target article

The worker who uses the tool system 1 is present in a predetermined workplace in a factory. The tool system 1 acquires identification information from the wireless device D1 or D2 (if the answer is YES in Step ST1).

To provide the identification information from the wireless device D1 (high-order system 6) to the tool system 1, the wireless device D1 may receive, for example, from a carrier system for carrying the target article W1, identification information about the target article W1 to be carried to the predetermined workplace. As a result, the identification information is transmitted to the tool system 1.

On the other hand, to provide the identification information from the wireless device D2 (tag 7) as an attachment of the target article W1 to the tool system 1, the wireless device D2 may start communicating with the tool system 1 as the target article W1 is carried to the predetermined workplace, for example. As a result, the identification information stored in the wireless device D2 is transmitted to the tool system 1.

The storage unit 11 of the tool system 1 stores a plurality of reference image data items, each of which belongs to any one of multiple groups. The multiple groups are associated one to one with a plurality of classes. In this example, the plurality of classes are supposed to be respective car models.

On receiving the identification information, the tool system 1 determines whether the group associated with the class (car model) identified by this identification information is stored or not in the storage unit 11 (in Step ST2). Unless the associated group is stored in the storage unit 11, the process goes back to Step ST1. On the other hand, if the associated group is stored in the storage unit 11, the tool system 1 reads out two or more reference image data items belonging to that group (in Step ST3).

### (10.3) Work on first work spot

Next, the worker performs a predetermined operation on the tool system 1 while pointing the image capturing unit 41 at the work spot such that the work spot falls within the image capturing range of the image capturing unit 41. This allows the image capturing unit 41 to shoot the work spot and generate captured image data (in Step ST4). The work spot shot in this processing step may or may not be any one of the work spots T1-T4.

Next, the tool system 1 determines the work spot that has been shot (in Step ST5). That is to say, the tool system 1 compares the captured image data generated in Step ST4 with the two or more reference image data items that have been read out in Step ST3 and belong to a particular group (car model). Specifically, the tool system 1 compares a feature quantity represented by the captured image data with feature quantities represented by the two or more reference image data items. This allows the tool system 1 to determine whether or not the work spot that has been shot by the image capturing unit 41 is any one of the plurality of work spots T1-T4.

Next, the tool system 1 reads out working procedure information from the storage unit 11. Then, the tool system 1 determines, by reference to the working procedure information read out from the storage unit 11, whether or not the work spot determined in Step ST5 is correct in working sequence (in Step ST6). For example, suppose that the work should be done on the work spots T1-T4 of the target article W1 in the order of T1, T2, T3, and T4. In that case, first, if the work spot determined in Step ST5 is the work spot T1, then the tool system 1 answers "YES" to the query of Step ST6. Otherwise, the tool system 1 answers "NO" to the query of Step ST6. If the answer is NO in Step ST6, the process goes back to Step ST4.

If the answer is YES in Step ST6, then the process proceeds to Step ST7. In Step ST7, the driving controller 55 of the tool system 1 allows the working part 32 to perform work. That is to say, the driving controller 55 allows the motor of the driving unit 31 to turn. When the worker pulls the trigger switch 221 with the motor allowed to turn, the motor starts turning. This allows the working part 32 to perform a predetermined operation (i.e., to start turning) and thereby have the work done on the work spot T1. That is to say, a fastening member is attached to the work spot T1.

When the tool system 1 determines that the work have been done on the current work spot T1 (if the answer is YES in Step ST8), then the process proceeds to Step ST9. The tool system 1 may determine, when finding the torque of the motor greater than a threshold value, for example, that the work have been done on the current work spot T1. Alternatively, the tool system 1 may also determine, when finding that the motor has kept turning for a predetermined time, for example, that the work have been done on the current work spot T1. Still alternatively, the tool system 1 may also determine, when finding that a predetermined time has passed since the motor started turning, for example, that the work have been done on the current work spot T1.

In Step ST9, the driving controller 55 of the tool system 1 prohibits the working part 32 from performing any work. That is to say, the driving controller 55 prohibits the motor from turning. Next, the tool system 1 determines whether or not the work has been done on the current target article W1 (in Step ST10). That is to say, in Step ST10, the tool system 1 determines whether or not the work has been done on all of the work spots T1-T4. If the answer is YES in Step ST10, then the process goes back to Step ST1. In that case, when the next target article W1 arrives, the same series of processing steps will be performed again following this flow on the next target article W1 as the work target. On the other hand, if the answer is NO in Step ST10, the process goes back to Step ST4. Next, it will be described what processing steps are performed if the answer is YES in Step ST8 (i.e., if the work has been done on the work spot T1) and then the process goes back to Step ST4.

### (10.4) Work on second work spot

The worker makes the image capturing unit 41 shoot the next work spot (in Step ST4). The tool system 1 determines the work spot that has been shot (in Step ST5). That is to say, the tool system 1 determines whether or not the work spot that has been shot by the image capturing unit 41 is any one of the plurality of work spots T1-T4.

Next, the tool system 1 determines, in Step ST6, by reference to the working procedure information read out from the storage unit 11, whether or not the work spot determined in Step ST5 is correct in working sequence. In this case, if the work spot determined in Step ST5 is the work spot T2, then the tool system 1 answers "YES" to the query of Step ST6 and allows the working part 32 to perform work (in Step ST7). Otherwise, the tool system 1 answers "NO" to the query of Step ST6.

If the tool system 1 determines that the work have been done on the work spot T2 (if the answer is YES in Step ST8), then the driving controller 55 prohibits the working part 32 from performing work (in Step ST9). Then, the process goes back to Step ST4 (if the answer is NO in Step ST10).

### (10.5) Work on third work spot

The worker makes the image capturing unit 41 shoot the next work spot (in Step ST4). The tool system 1 determines the work spot that has been shot (in Step ST5).

Next, the tool system 1 determines, in Step ST6, by reference to the working procedure information read out from the storage unit 11, whether or not the work spot determined in Step ST5 is correct in working sequence. In this case, if the work spot determined in Step ST5 is the work spot T3, then the tool system 1 answers "YES" to the query of Step ST6 and allows the working part 32 to perform work (in Step ST7). Otherwise, the tool system 1 answers "NO" to the query of Step ST6.

If the tool system 1 determines that the work have been done on the work spot T3 (if the answer is YES in Step ST8), then the driving controller 55 prohibits the working part 32 from performing work (in Step ST9). Then, the process goes back to Step ST4 (if the answer is NO in Step ST10).

### (10.6) Work on fourth work spot

The worker makes the image capturing unit 41 shoot the next work spot (in Step ST4). The tool system 1 determines the work spot that has been shot (in Step ST5).

Next, the tool system 1 determines, in Step ST6, by reference to the working procedure information read out from the storage unit 11, whether or not the work spot determined in Step ST5 is correct in working sequence. In this case, if the work spot determined in Step ST5 is the work spot T4, then the tool system 1 answers "YES" to the query of Step ST6 and allows the working part 32 to perform work (in Step ST7). Otherwise, the tool system 1 answers "NO" to the query of Step ST6.

If the tool system 1 determines that the work have been done on the work spot T4 (if the answer is YES in Step ST8), then the driving controller 55 prohibits the working part 32 from performing work (in Step ST9).

By performing these processing steps, the tool system 1 has the work done on the work spots T1-T4. Thus, the answer to the query of Step ST10 is YES and the process goes back to Step ST1. Thereafter, when the next target article W1 arrives, the same series of processing steps will be performed again following this flow on the next target article W1 as the work target.

### (10.7) Advantages

The method of using the tool system 1 described above allows the tool system 1 to determine the work spot without using any reference image data items other than the items belonging to a particular group. For example, reference image data items corresponding to car models A, B, and C may be stored in the storage unit 11. Suppose a situation where at a point in time, the target article W1 on which the tool system 1 actually performs work corresponds to a car model A. In other words, suppose a situation where a target article W1 corresponding to the car model A has been shot by the image capturing unit 41. In that case, to determine the work spot, the tool system 1 refers to only the reference image data items corresponding to the car model A out of the reference image data items stored in the storage unit 11 and does not refer to the reference image data items corresponding to the car model B or C. This enables the tool system 1 to perform the processing of determining the work spot more speedily than in a situation where all of the reference image data items stored in the storage unit 11 are used. In addition, this may also reduce the chances of the tool system 1 taking, by mistake, the work spot shot by the image capturing unit 41 for a work spot corresponding to the car model B or C.

### (First variation)

Next, a tool system 1 according to a first variation will be described. In the following description, any constituent element of this first variation, having the same function as a counterpart of the embodiment described above, will be designated by the same reference numeral as that counterpart's, and description thereof will be omitted herein.

The tool system 1 according to this first variation has the function of generating the identification information. Thus, the tool system 1 according to the first variation does not have to receive the identification information by communicating wirelessly with the wireless device D1 or D2. More specifically, the tool system 1 makes the image capturing unit 41 shoot the target article W1, thereby generating image data of the target article W1 (as target image data). The tool system 1 has the function of generating the identification information by making an image analysis on the target image data. When using this function, the tool system 1 may perform the step of shooting the target article W1 and the step of generating the identification information by making an image analysis on the target image data, instead of the step ST1 (refer to FIG. 4).

That is to say, in this first variation, the image capturing unit 41 generates target image data by shooting the target article W1. The functions of the class identifier 53 include the function of identifying the class of the target article W1 based on the target image data and thereby generating the identification information.

To identify the class of the target article W1, the image capturing unit 41 may shoot a symbol attached to the target article W1 so that the tool system 1 decodes the symbol. That is to say, the functions of the class identifier 53 may include the function of identifying the class of the target article W1 by a symbol attached to the target article W1 and thereby generating the identification information. In this case, the symbol attached to the target article W1 may be, for example, a one-dimensional or two-dimensional barcode, a character, a numeral, a pattern, an icon, or a combination thereof. As used herein, the expression "symbol is attached to the target article W1" may refer to a situation where the symbol is inscribed, by printing, for example, directly on the target article W1 or a situation where a tag, seal, or any other identifier with the symbol is attached to the target article W1, whichever is appropriate. Alternatively, the symbol may also be inscribed, by printing, for example, on a member (such as a stage or a box) on/in which the target article W1 is supported or put. Still alternatively, a tag, seal, or any other identifier with the symbol may be attached to such a member.

Alternatively, to identify the class of the target article W1, the tool system 1 may determine the shape of at least a part of the target article W1 by making an image analysis on the target image data. That is to say, the functions of the class identifier 53 may include the function of identifying the class of the target article W1 by the shape of the target article W1 and thereby generating the identification information.

Optionally, the image analysis of the target image data may also be made by an external device (such as the high-order system 6 or a cloud server) provided outside of the tool system 1. That is to say, the tool system 1 may identify the class of the target article W1 by acquiring the result of the image analysis from the external device.

### (Second variation)

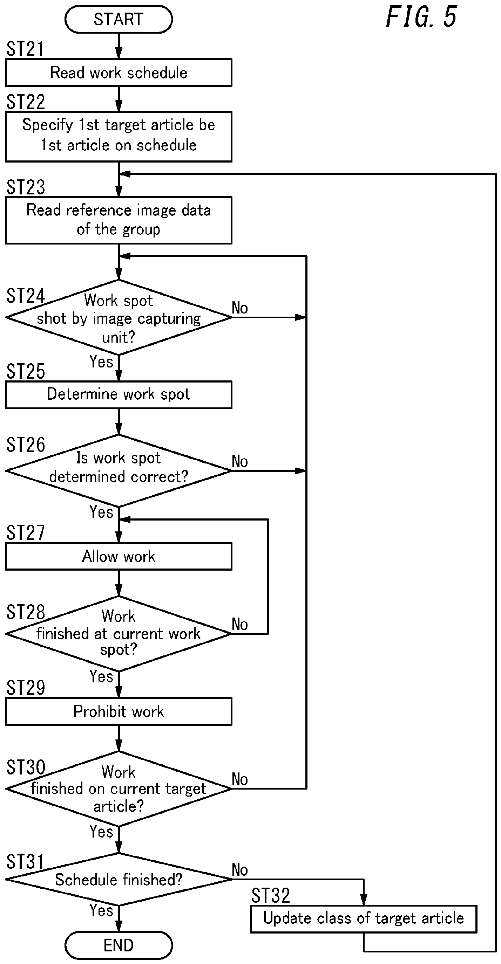

Next, a tool system 1 according to a second variation will be described with reference to FIG. 5. In the following description, any constituent element of this second variation, having the same function as a counterpart of the embodiment described above, will be designated by the same reference numeral as that counterpart's, and description thereof will be omitted herein.

### (1) Overview

In this second variation, the storage unit 11 stores a work schedule for a plurality of target articles W1. The tool system 1 identifies the class of the current target article W1 by reference to the schedule.

This second variation will be described as being applied to a situation where the target articles W1 are car components, target articles W1 corresponding to car models A, B, A, and C, respectively, are carried in this order to a workplace in a factory, and the worker performs work on these target articles W1 in the order of arrival.

First, the first target article W1 is carried to the workplace. The storage unit 11 stores a schedule indicating that target articles W1 corresponding to car models A, B, A, and C, respectively, are to be carried in this order. Thus, the tool system 1 determines the class of the first target article W1 to be car model A. Also, when determining the work spot on the first target article W1, the tool system 1 refers to only the reference image data items corresponding to the car model A, without referring to reference image data items corresponding to the car model B or C, out of the reference image data items stored in the storage unit 11.

When the work has been done on every work spot of the first target article W1, the second target article W1 will be carried to the workplace. The tool system 1 determines, by reference to the schedule, the second target article W1 to correspond to the car model B. Also, when determining the work spot on the second target article W1, the tool system 1 refers to only the reference image data items corresponding to the car model B, without referring to reference image data items corresponding to the car model A or C, out of the reference image data items stored in the storage unit 11.

When the work has been done on every work spot of the second target article W1, the third target article W1 will be carried to the workplace. The tool system 1 determines, by reference to the schedule, the third target article W1 to correspond to the car model A. Also, when determining the work spot on the third target article W1, the tool system 1 refers to only the reference image data items corresponding to the car model A, without referring to reference image data items corresponding to the car model B or C, out of the reference image data items stored in the storage unit 11.

When the work has been done on every work spot of the third target article W1, the fourth target article W1 will be carried to the workplace. The tool system 1 determines, by reference to the schedule, the fourth target article W1 to correspond to the car model C. Also, when determining the work spot on the fourth target article W1, the tool system 1 refers to only the reference image data items corresponding to the car model C, without referring to reference image data items corresponding to the car model A or B, out of the reference image data items stored in the storage unit 11.

The tool system 1 may refer, to find the place in the work schedule of the target article W1, to either information about a time (e.g., point in time) when the target article W1 was carried or information about the order in which the plurality of target articles W1 are to be carried.

As can be seen, the storage unit 11 according to this second variation stores identification information associated with either time or order (as information to identify the car model, for example). The functions of the class identifier 53 include the function of acquiring the identification information from the storage unit 11 in accordance with the time or the order. This enables acquiring the identification information and identifying the class (such as the car model) of the target article W1 even without acquiring the identification information from the wireless device D1 or D2 or making an image analysis of the target article W1.

Note that the schedule stored in the storage unit 11 may be updated every time the tool system 1 receives schedule update information from the wireless device D1 or D2.

Optionally, the tool system 1 may further have the function of generating the identification information by making an image analysis of the target image data as in the first variation.

Additionally or alternatively, the tool system 1 may further have the function of receiving the identification information by wirelessly communicating with the wireless device D1 or D2 as in the exemplary embodiment described above.

### (2) Exemplary use

### (2.1) Premise

Next, an exemplary use of the tool system 1 according to this second variation will be described with reference to FIG. 5. Note that the flowchart shown in FIG. 5 shows just an exemplary method of using the tool system 1 according to the second variation. Thus, the processing steps shown in FIG. 5 may be performed in a different order as appropriate, an additional processing step may be performed as needed, or at least one of the processing steps may be omitted as appropriate. Note that in the following example, the target article W1 shown in FIG. 3 is supposed to be a car component and the identification information is supposed to include car model information. Also, although the following description will be focused on a single tool system 1, there may be a plurality of tool systems 1. In that case, the processing to be described below will be performed by each of the plurality of tool systems 1.

In an initial state, the driving controller 55 of the tool system 1 prohibits the working part 32 from performing any work. That is to say, in that state, the driving unit 31 is not activated.

### (2.2) Details

The worker who uses the tool system 1 is present in a predetermined workplace in a factory. The tool system 1 reads out a work schedule from the storage unit 11 (in Step ST21). This second variation will be described as being applied to a situation where a work schedule indicating that the worker is to perform work on target articles W1 corresponding to car models A, B, A, and C in this order has been read out.

The tool system 1 specifies that the target article W1 to be processed first by the tool system 1 be the first article on the schedule (in Step ST22). In this variation, the schedule has been arranged such that the work on a target article W1 corresponding to the car model A will be performed first. Thus, the tool system 1 specifies that the target article W1 to be processed first by the tool system 1 be a target article W1 corresponding to the car model A.

The series of processing steps ST23-ST30 that follow Step ST22 are respectively the same as the processing steps ST3-ST10 shown in FIG. 4. Specifically, the tool system 1 determines the work spot by reference to the reference image data items corresponding to the car model A (in Step ST25) and allows the working part 32 to perform work on the target article W1 when determining, by reference to the predetermined working procedure information, that the work spot thus determined is correct in working sequence (in Step ST27).

When the work has been done on all work spots (e.g., work spots T1-T4) of the first target article W1 (if the answer is YES in Step ST30), the tool system 1 determines whether or not the schedule has been executed completely (in Step ST31). In other words, the tool system 1 determines whether or not the work has been done on four target articles W1 corresponding to the car models A, B, A, and C in this order. In this case, the work has been done on only the first target article W1, and therefore, the tool system 1 updates the class of the target article W1 (in Step ST32). That is to say, the tool system 1 updates the identification information about the class (car model) of the target article W1. After that, the tool system 1 determines the work spot by reference to the reference image data items belonging to the group associated with the car model B. In such a state, work is performed on the second target article W1.

When the work has been done on all work spots of the second target article W1 (if the answer is YES in Step ST30), work will be performed in the same way on the third target article W1 and the fourth target article W1. That is to say, when determining the work spot on the third target article W1, the tool system 1 refers to the reference image data items belonging to the group associated with the car model A. Next, when determining the work spot on the fourth target article W1, the tool system 1 refers to the reference image data items belonging to the group associated with the car model C.

When the work has been done on the first through fourth articles W1 (if the answer is YES in Step ST31), the process will end.

### (Other variations of embodiment)

Next, other variations of the exemplary embodiment will be enumerated one after another. Note that the variations to be described below may be adopted in combination as appropriate. Also, any of the variations to be described below may also be adopted as appropriate in combination with any of the first and second variations described above.

In the exemplary embodiment described above, the tool system 1 determines whether or not the work spot shot by the image capturing unit 41 agrees with any one of the plurality of work spots. Alternatively, the tool system 1 may also determine whether or not the work spot shot by the image capturing unit 41 is a particular work spot (such as the work spot T1). For example, if the work schedule is arranged such that work should be done first on the work spot T1 with respect to a certain target article W1, then the tool system 1 may determine, before performing the work for the first time, whether or not the work spot shot by the image capturing unit 41 is the work spot T1.

The tool block 3 does not have to be an impact wrench. Alternatively, the tool block 3 may also be an electric screwdriver, drill, drill-screwdriver, saw, plane, nibbler, hole saw, or grinder, for example. Optionally, the tool block 3 may also be used for multiple purposes (e.g., as a screwdriver and as a drill) by changing the working part 32.

The motive power supplied from the power source 201 to the driving unit 31 does not have to be electrical energy but may also be pneumatic pressure or hydraulic pressure, for example. That is to say, the tool block 3 does not have to be an electric tool.

The driving unit 31 may receive the motive power from an external power source provided outside of the tool system 1. For example, the driving unit 31 may receive electrical energy from a commercial power supply or a private power generator as an alternative power source.

In the exemplary embodiment described above, the camera block 4 is provided for the tool block 3. As used herein, if something is "provided for" something else, then the former may be built in (e.g., integrated inseparably with) the latter or may be just attached as an external member to the latter (e.g., removably secured with a coupler, for example). That is to say, the camera block 4 provided for the tool block 3 may be built in the tool block 3 or just attached as an external member to the tool block 3, whichever is appropriate.

The camera block 4 does not have to be provided for the tool block 3. Alternatively, the camera block 4 may also be provided for a housing which is provided separately from the tool block 3. In that case, the camera block 4 may include, for example, a communications unit for communicating with the tool block 3 and may transmit the captured image data to the tool block 3.

The wireless device D2 does not have to be a tag. Alternatively, the wireless device D2 may also be a radio beacon, for example. Still alternatively, a carrier for carrying the target article W1 may be provided with a wireless communication capability and used as the wireless device D2.

The tool system 1 does not have to be used for assembling work at a factory but may also be used for any other purpose.

The tool system 1 does not have to either allow the driving unit 31 to be activated or prohibit the driving unit 31 from being activated depending on the work spot that has been determined. Alternatively, the operation mode of the tool system 1 may be changed, for example, according to the work spot determined. Still alternatively, a predetermined operation of the tool system 1 may or may not be restricted according to the work spot that has been determined.

The tool system 1 according to the present disclosure includes a computer system. The computer system may include, as principal hardware components, a processor and a memory. At least some of the functions of the tool system 1 according to the present disclosure may be performed by making the processor execute a program stored in the memory of the computer system. The program may be stored in advance in the memory of the computer system. Alternatively, the program may also be downloaded through a telecommunications line or be distributed after having been recorded in some non-transitory storage medium such as a memory card, an optical disc, or a hard disk drive, any of which is readable for the computer system. The processor of the computer system may be made up of a single or a plurality of electronic circuits including a semiconductor integrated circuit (IC) or a large-scale integrated circuit (LSI). As used herein, the "integrated circuit" such as an IC or an LSI is called by a different name depending on the degree of integration thereof. Examples of the integrated circuits include a system LSI, a very-large-scale integrated circuit (VLSI), and an ultra-large-scale integrated circuit (ULSI). Optionally, a field-programmable gate array (FPGA) to be programmed after an LSI has been fabricated or a reconfigurable logic device allowing the connections or circuit sections inside of an LSI to be reconfigured may also be adopted as the processor. Those electronic circuits may be either integrated together on a single chip or distributed on multiple chips, whichever is appropriate. Those multiple chips may be aggregated together in a single device or distributed in multiple devices without limitation. As used herein, the "computer system" includes a microcontroller including one or more processors and one or more memories. Thus, the microcontroller may also be implemented as a single or a plurality of electronic circuits including a semiconductor integrated circuit or a large-scale integrated circuit.

Also, in the embodiment described above, the functions of the tool system 1 are integrated together in a single housing. However, this is not an essential configuration for the tool system 1. Alternatively, those constituent elements of the tool system 1 may be distributed in multiple different housings. Still alternatively, at least some functions of the tool system 1, such as some functions of the processing unit 5, may be implemented as a server or a cloud computing system as well.

Conversely, the plurality of functions that are distributed in multiple different housings in the embodiment described above may be integrated together in a single housing. For example, the tool system 1 may have some functions of the high-order system 6.

### (Recapitulation)

The embodiment and its variations described above may be specific implementations of the following aspects of the present disclosure.

A tool system (1) according to a first aspect includes a driving unit (31), a working part (32), an image capturing unit (41), a storage unit (11), a class identifier (53), and a spot determiner (54). The driving unit (31) is activated with power supplied from a power source (201). The working part (32) is driven by the driving unit (31) to perform work on a work spot of a target article (W1). The image capturing unit (41) shoots the work spot and thereby generates captured image data. The storage unit (11) stores a plurality of reference image data items with the plurality of reference image data items classified into multiple groups according to respective classes of a plurality of articles. The plurality of reference image data items correspond to respective models of work spots of the plurality of articles. The class identifier (53) acquires identification information to identify the class of the target article (W1). The spot determiner (54) determines the work spot shot by the image capturing unit (41) by comparing the captured image data with one of the plurality of reference image data items, which belongs to one of the multiple groups that is associated with the class of the target article (W1) identified by reference to the identification information.

According to this configuration, the spot determiner (54) determines the work spot by using a reference image data item belonging to a group associated with the class of the target article (W1). That is to say, the spot determiner (54) may determine the work spot without using reference image data items not belonging to the target group. This enables speeding up the processing of determining the work spot, compared to using all reference image data items. In addition, this also reduces the chances of the spot determiner (54) taking a work spot, associated with a reference image data item not belonging to the target group, for a work spot on which work is going to be performed.

A tool system (1) according to a second aspect, which may be implemented in conjunction with the first aspect, further includes a communications unit (12) that communicates wirelessly with a wireless device (D1, D2). The class identifier (53) has at least the function of acquiring the identification information from the wireless device (D1, D2) via the communications unit (12). In other words, the class identifier (53) is configured to acquire the identification information from the wireless device (D1, D2) via the communications unit (12).

This configuration enables updating the identification information easily.

In a tool system (1) according to a third aspect, which may be implemented in conjunction with the second aspect, the wireless device (D2) is an attachment of the target article (W1).

This configuration enables updating the identification information via wireless communication by bringing the target article (W1) closer to the tool system (1), thus making it easier to manage the timing to update the identification information.

In a tool system (1) according to a fourth aspect, which may be implemented in conjunction with any one of the first to third aspects, the image capturing unit (41) shoots the target article (W1) and thereby generates target image data. The class identifier (53) has at least the function of identifying the class of the target article (W1) based on the target image data and thereby generating the identification information. In other words, the class identifier (53) is configured to identify the class of the target article (W1) based on the target image data and thereby generate the identification information.

This configuration enables acquiring the identification information even without using any wireless device (D1, D2).

In a tool system (1) according to a fifth aspect, which may be implemented in conjunction with the fourth aspect, the class identifier (53) has at least the function of identifying the class of the target article (W1) by a symbol attached to the target article (W1) and thereby generating the identification information. In other words, the class identifier (53) is configured to identify the class of the target article (W1) by a symbol attached to the target article (W1) and thereby generate the identification information.

This configuration enables acquiring the identification information by simple processing.

In a tool system (1) according to a sixth aspect, which may be implemented in conjunction with the fourth or fifth aspect, the class identifier (53) has at least the function of identifying the class of the target article (W1) by a shape of the target article (W1) and thereby generating the identification information. In other words, the class identifier (53) is configured to identify the class of the target article (W1) by a shape of the target article (W1) and thereby generate the identification information.

This configuration enables acquiring the identification information even if no symbol is attached to the target article (W1).

In a tool system (1) according to a seventh aspect, which may be implemented in conjunction with any one of the first to sixth aspects, the storage unit (11) stores the identification information associated with either time or order. The class identifier (53) has at least the function of acquiring the identification information from the storage unit (11) in accordance with either the time or the order. In other words, the class identifier (53) is configured to acquire the identification information from the storage unit (11) in accordance with either the time or the order.

This configuration enables acquiring the identification information earlier.

Note that the constituent elements according to the second to seventh aspects are not essential constituent elements for the tool system (1) but may be omitted as appropriate.

### Reference Signs List

- 1: Tool System
- 11: Storage Unit
- 12: Communications Unit
- 31: Driving Unit
- 32: Working Part
- 41: Image Capturing Unit
- 53: Class Identifier
- 54: Spot Determiner
- 201: Power Source
- D1, D2: Wireless Device
- W1: Target Article

## Claims

1. A tool system (1) comprising:
a driving unit (31) configured to be activated with power supplied from a power source (201);
a working part (32) configured to be driven by the driving unit (31) to perform work on a work spot of a target article (W1);
an image capturing unit (41) configured to shoot the work spot and thereby generate captured image data;
a storage unit (11) configured to store a plurality of reference image data items, corresponding to respective models of work spots of a plurality of articles, with the plurality of reference image data items classified into multiple groups according to respective classes of the plurality of articles,
a class identifier (53) configured to acquire identification information to identify a class of the target article (W1); and
a spot determiner (54) configured to determine the work spot shot by the image capturing unit (41) by comparing the captured image data with one of the plurality of reference image data items, which belongs to one of the multiple groups that is associated with the class of the target article (W1) identified by reference to the identification information.

2. The tool system (1) of claim 1, further comprising a communications unit (12) configured to communicate wirelessly with a wireless device (D1, D2), wherein
the class identifier (53) is configured to acquire the identification information from the wireless device (D1, D2) via the communications unit (12).

3. The tool system (1) of claim 2, wherein
the wireless device (D2) is an attachment of the target article (W1).

4. The tool system (1) of any one of claims 1 to 3, wherein
the image capturing unit (41) is configured to shoot the target article (W1) and thereby generate target image data, and
the class identifier (53) is configured to identify the class of the target article (W1) based on the target image data and thereby generate the identification information.

5. The tool system (1) of claim 4, wherein
the class identifier (53) is configured to identify the class of the target article (W1) by a symbol attached to the target article (W1) and thereby generate the identification information.

6. The tool system (1) of claim 4 or 5, wherein
the class identifier (53) is configured to identify the class of the target article (W1) by a shape of the target article (W1) and thereby generate the identification information.

7. The tool system (1) of any one of claims 1 to 6, wherein
the storage unit (11) is configured to store the identification information associated with either time or order, and
the class identifier (53) is configured to acquire the identification information from the storage unit (11) in accordance with either the time or the order.
